# EUROPÄISCHE PATENTSCHRIFT

(11) **EP 3 918 779 B1**
(45) Veröffentlichungstag und Bekanntmachung des Hinweises auf die Patenterteilung: **01.03.2023**
(21) Anmeldenummer: 20702455.5
(22) Anmeldetag: 28.01.2020
(51) Int. Cl.: H04M 1/72412, H04M 1/72481, G07F 19/00, G06Q 20/32, G09B 21/00

(54) **VERFAHREN ZUM BEDIENEN EINES GELDAUTOMATEN, VERFAHREN ZUM BETREIBEN EINES GELDAUTOMATEN, GELDAUTOMAT, VERFAHREN ZUM BETREIBEN EINES MOBILTELEFONS UND MOBILTELEFON**
METHOD FOR USING AN AUTOMATED TELLER MACHINE, METHOD FOR OPERATING AN AUTOMATED TELLER MACHINE, AUTOMATED TELLER MACHINE, METHOD FOR OPERATING A MOBILE PHONE AND MOBILE PHONE
PROCÉDÉ D'UTILISATION D'UN GUICHET AUTOMATIQUE DE BANQUE, PROCÉDÉ DE FONCTIONNEMENT D'UN GUICHET AUTOMATIQUE DE BANQUE, GUICHET AUTOMATIQUE DE BANQUE, PROCÉDÉ DE FONCTIONNEMENT D'UN TÉLÉPHONE MOBILE ET TÉLÉPHONE MOBILE

(30) Priorität: 28.01.2019 DE 102019102005
(43) Veröffentlichungstag der Anmeldung: 08.12.2021
(73) Patentinhaber: Wincor Nixdorf International GmbH, 33106 Paderborn (DE)
(72) Erfinder: WEIS, Eduard, 33098 Paderborn (DE); KNOBLOCH, Alexander, 33100 Paderborn (DE)
(86) Internationale Anmeldenummer: PCT/EP2020/052030
(87) Internationale Veröffentlichungsnummer: WO 2020/157059

(56) Entgegenhaltungen:
- EP-A1- 1 643 468
- DE-U1- 20 001 117
- US-A1- 2014 239 063

## Beschreibung

Die Erfindung betrifft ein Verfahren zum Bedienen eines Geldautomaten, ein Verfahren zum Betreiben eines Geldautomaten, einen Geldautomaten, ein Verfahren zum Betreiben eines Mobiltelefons und ein Mobiltelefon.

Verfahren zum Bedienen eines Geldautomaten sind aus der EP1643468A1, der US2014/239063A1 und der DE20001117U1 bekannt.

Heutzutage bieten Geldautomaten häufig eine Audio-Schnittstelle zur Führung durch die Menüs für Menschen mit Sehbehinderungen an. Dafür kann ein Nutzer einen handelsüblichen Kopfhörer mit Klinkenstecker mit dem Geldautomaten verbinden. Der Nutzer bekommt dann passend zum aktuellen Bildschirminhalt über den Kopfhörer Anweisungen für die Bedienung des Automaten. Falls der Nutzer keinen Kopfhörer dabei hat, kann er diese Funktion des Geldautomaten nicht benutzen. Falls der Nutzer noch dazu eine Sehbehinderung hat, so kann es sein, dass er den Geldautomaten ohne Kopfhörer überhaupt nicht benutzen kann. Außerdem geht in letzter Zeit der Trend dahin, dass Kopfhörer nicht mehr über Klinkenstecker sondern kabellos über Bluetooth an die Mobiltelefone angebunden werden. So gibt es heutzutage auch schon einige Smartphones, die keinen dedizierten Klinkenstecker mehr verwenden und stattdessen standardmäßig Bluetooth Kopfhörer anbieten. Daher wäre es wünschenswert, auch am Geldautomaten die Verwendung kabelloser Kopfhörer zu ermöglichen, insbesondere über eine Bluetooth-Verbindung, beispielsweise über eine Bluetooth-Low-Energy(BLE)-Verbindung. Dabei gibt es allerdings eine Reihe technischer Probleme. Kabellose Kopfhörer müssen grundsätzlich mit der entsprechenden Audioquelle gepaart werden. Normalerweise führt man eine derartige Kopplung mit einem Mobiltelefon, heutzutage meistens mit einem Smartphone, durch. Eine direkte Kopplung mit dem Geldautomaten ist zwar technisch möglich, wäre aber sehr aufwendig und würde voraussetzen, dass davor die Verbindung zwischen Kopfhörer und Mobiltelefon beendet wird. Insbesondere für einen Menschen mit Sehbehinderung wäre dieser Prozess zu aufwendig. Außerdem verwenden kabellose Kopfhörer in der Regel keine BLE-Verbindung für die Audio-Übertragung. Lediglich zum Aufbau der Bluetooth-Verbindung wird manchmal BLE verwendet.

Alternativ dazu könnte der Geldautomat eine normale Bluetooth-Verbindung (also keine BLE-Verbindung) zum Mobiltelefon herstellen und über diesen Umweg die Sprachführung auf den Kopfhörern wiedergeben. Für eine Audio-Übertragung mit normalem Bluetooth wird derzeit beispielsweise das standardisierte "Advanced Audio Distribution Profile" (A2DP) verwendet. Hiermit kann eine Audio Verbindung von einer Audio-Quelle zu einer Audio-Senke hergestellt werden. Leider unterstützen derzeit sowohl Mobiltelefone mit einem Android- Betriebssystem als auch Mobiltelefone mit einem iOS-Betriebssystem die Rolle der Audio-Senke ohne Änderungen im Betriebssystem nicht.

Des Weiteren wird das A2DP-Protokoll von BLE nicht unterstützt.

Die Audio-Übertragung müsste also über ein anderes Protokoll erfolgen. Dabei gibt es jedoch das Problem der Datenrate der Übertragung. Es gibt beispielsweise ein Protokoll der Firma Texas Instruments, das eine Datenrate von 136,67 kbps (66.67kpbs payload) benötigt. Diese Rate ist prinzipiell mit BLE zu erreichen (Rate bis theoretisch 1 Mbit/s möglich), wird aber von Smartphones nicht unterstützt. Realistische Datenraten für Mobiltelefone mit Android-Betriebssystem liegen unterhalb von 60 kbps und für Mobiltelefone mit iOS-Betriebssystem unterhalb von 32 kbps.

Eine Aufgabe der Erfindung ist es, ein Verfahren zum Bedienen eines Geldautomaten bereitzustellen, das auf einfache und kostengünstige Weise eine Nutzung des Geldautomaten mittels Audio-Informationen ermöglicht.

Eine Aufgabe der Erfindung ist es, ein Verfahren zum Betreiben eines Geldautomaten bereitzustellen, das auf einfache und kostengünstige Weise eine Nutzung des Geldautomaten mittels Audio-Informationen ermöglicht.

Eine Aufgabe der Erfindung ist es, einen Geldautomaten bereitzustellen, der auf einfache und kostengünstige Weise eine Nutzung des Geldautomaten mittels Audio-Informationen ermöglicht.

Eine Aufgabe der Erfindung ist es, ein Verfahren zum Betreiben eines Mobiltelefons bereitzustellen, das auf einfache und kostengünstige Weise eine Nutzung eines Geldautomaten mittels Audio-Informationen ermöglicht.

Eine Aufgabe der Erfindung ist es, ein Mobiltelefon bereitzustellen, das auf einfache und kostengünstige Weise eine Nutzung eines Geldautomaten mittels Audio-Informationen ermöglicht.

Eine Aufgabe der Erfindung wird gelöst durch ein Verfahren zum Bedienen eines Geldautomaten, bei dem: der Geldautomat über eine Bluetooth-Low-Energy(BLE)-Verbindung mit einem Mobiltelefon eines Nutzers des Geldautomaten gekoppelt wird; von dem Geldautomaten ein erster String, dessen Inhalt sich auf die Bedienung des Geldautomaten bezieht, über die BLE-Verbindung an das Mobiltelefon des Nutzers gesendet wird; und von dem Mobiltelefon dem Nutzer der erste String mittels einer Text-to-Speech Funktion vorgelesen wird, und der Nutzer den Geldautomat entsprechend bedienen kann.

Die vorliegende Erfindung basiert zum Einen auf der Erkenntnis, dass die Informationen bezüglich der Bedienmöglichkeiten, die der Geldautomat dem Nutzer aktuell bietet, nur aus Text bestehen und nicht beliebige Töne, Geräusche, Bilder und/oder Videos wiedergebgeben werden müssen und die Übertragung der entsprechenden Daten daher in Textform, also als String, in anderen Worten als Zeichenkette, erfolgen kann. Beispielsweise benötigt der Beispieltext "Hallo, dies ist eine Anweisung zur Nutzung einer Nutzeroberfläche" als String 68 Byte, also 544 bit. In Form einer mp3-Audiodatei benötigt der gesprochene Text bei einer Bitrate von 40 kbps beispielsweise einen Speicherplatz von 22,3 kByte, also 178,4 kbit. Die Übertragung des Strings benötigt somit verglichen mit der Übertragung von Audio-und/oder Videodaten eine wesentlich geringere Daten- bzw. Bitrate und der String kann ohne Weiteres mittels der BLE-Verbindung übertragen werden. Der Text bezüglich der Bedienmöglichkeiten zur Nutzung des Geldautomaten kann so unter Einhaltung einer stark beschränkten Datenrate auf das Mobiltelefon übertragen werden.

Die vorliegende Erfindung basiert zum Anderen auf der Erkenntnis, dass herkömmliche Mobiltelefone, insbesondere Smartphones, in der Regel standardmäßig über eine Text-to-Speech(zu Deutsch: Text-zu-Sprache)-Funktion verfügen. Ein derartiges Mobiltelefon kann durch die Text-to-Speech Funktion den als String empfangenen Text in Sprache umwandeln und mittels einer geeigneten Ausgabeeinheit, beispielsweise dem in dem Mobiltelefon eingebauten Lautsprecher oder einem mit dem Mobiltelefon gekoppelten Lautsprecher, beispielsweise einem Kopfhörer, wiedergeben. Entsprechende Bibliotheken sind in den meisten gängigen Mobiltelefon-Betriebssystemen vorhanden.

Somit ermöglicht das Verfahren zum Bedienen des Geldautomaten auf einfache und kostengünstige Weise eine Nutzung des Geldautomaten mittels Audio-Informationen. Insbesondere kann eine Verbindung zwischen dem Geldautomaten und dem Mobiltelefon hergestellt werden, um Audio-Anweisungen zur Bedienung des Automaten zu geben, beispielsweise einem visuell beeinträchtigten Nutzer. Der Nutzer muss keine Kopfhörer, insbesondere keine mit Klinkenstecker, mit sich führen, sondern nur sein Mobiltelefon. Die Anweisungen können vom Lautsprecher des Telefons oder, falls vorhanden, von den Kopfhörern wiedergegeben werden.

Die Kopplung des Geldautomaten mit dem Mobiltelefon des Nutzers über die Bluetooth-Low-Energy(BLE)-Verbindung kann beispielsweise auf herkömmliche Weise erfolgen. Da diese Kopplung standardisiert und korrespondierend zu den entsprechenden offiziellen Protokollen erfolgt, wird in dieser Beschreibung nicht näher auf den entsprechenden Standard und die entsprechenden Protokolle eingegangen, sondern lediglich auf die auf diesem Gebiet einschlägige Literatur verwiesen.

Der String und gegebenenfalls weitere Strings können beispielsweise mittels eines proprietären BLE Gatt-Services von dem Geldautomat an das Mobiltelefon gesendet werden. Der Inhalt, der sich auf die Bedienung des Geldautomaten bezieht, kann beispielsweise repräsentativ dafür sein, welche Bedienmöglichkeiten der Nutzer aktuell an dem Geldautomat hat und/oder welche Informationen der Geldautomat dem Nutzer aktuell auf einer ersten Anzeigeeinheit des Geldautomaten darstellt.

Zum Aufbauen der BLE-Verbindung, also zum Koppeln des Mobiltelefons mit dem Geldautomaten, zum Empfangen des Strings und zur Audiowiedergabe, also zum Vorlesen, des entsprechenden Textes kann auf dem Mobiltelefon eine entsprechende Anwendung, kurz App, gespeichert sein.

Gemäß einer Weiterbildung wird vor der Kopplung des Geldautomaten mit dem Mobiltelefon von dem Mobiltelefon eine Kopplungsnachricht an den Geldautomaten gesendet, die repräsentativ dafür ist, dass das Mobiltelefon mit dem Geldautomaten gekoppelt werden soll. Von dem Geldautomaten wird in Reaktion auf das Empfangen der Kopplungsnachricht die Kopplung mit dem Mobiltelefon initiiert. Die Kopplungsnachricht kann beispielsweise ein Bestandteil des entsprechenden BLE-Standards und/oder BLE-Protokolls zum Koppeln des Mobiltelefons mit dem Geldautomaten sein.

Gemäß einer Weiterbildung wird vor dem Senden der Kopplungsnachricht von dem Geldautomaten eine Informationsnachricht ausgesendet, die repräsentativ dafür ist, dass der Geldautomat in der Lage ist, über die BLE-Verbindung den String zu senden. Von dem Mobiltelefon wird in Reaktion auf das Empfangen der Informationsnachricht die Kopplungsnachricht gesendet.

Gemäß einer Weiterbildung ändern sich infolge der Bedienung des Geldautomaten durch den Nutzer die Bedienmöglichkeiten, die der Geldautomat dem Nutzer aktuell bietet, und/oder die Informationen, die der Geldautomat aktuell auf der ersten Anzeigeeinheit darstellt. Von dem Geldautomaten wird ein zweiter String, der repräsentativ dafür ist, welche Bedienmöglichkeiten der Nutzer an dem Geldautomaten aktuell hat und/oder welche Informationen der Geldautomat aktuell auf der ersten Anzeigeeinheit darstellt, über die BLE-Verbindung an das Mobiltelefon des Nutzers gesendet. Von dem Mobiltelefon wird dem Nutzer der zweite String mittels der Text-to-Speech Funktion vorgelesen, wobei der Nutzer aufgrund des Vorlesens des zweiten Strings weiß, welche Bedienmöglichkeiten er aktuell hat und/oder was der Geldautomat aktuell auf der ersten Anzeigeeinheit darstellt, und dann erneut den Geldautomat bedienen kann.

Gemäß einer Weiterbildung wird am Ende der Bedienung des Geldautomaten durch den Nutzer die BLE-Verbindung zwischen dem Geldautomaten und dem Mobiltelefon getrennt und von dem Geldautomat wird erneut die Informationsnachricht ausgesendet.

Eine Aufgabe der Erfindung wird gelöst durch ein Verfahren zum Betreiben eines Geldautomaten, bei dem der Geldautomat über eine BLE-Verbindung mit einem Mobiltelefon eines Nutzers des Geldautomaten gekoppelt wird. Von dem Geldautomaten wird ein erster String, dessen Inhalt sich auf die Bedienung des Geldautomaten bezieht, über eine BLE-Verbindung an das Mobiltelefon des Nutzers gesendet.

Gemäß einer Weiterbildung empfängt vor der Kopplung des Geldautomaten mit dem Mobiltelefon der Geldautomat von dem Mobiltelefon eine Kopplungsnachricht, die repräsentativ dafür ist, dass das Mobiltelefon mit dem Geldautomaten gekoppelt werden soll. Von dem Geldautomaten wird in Reaktion auf das Empfangen der Kopplungsnachricht die Kopplung mit dem Mobiltelefon initiiert.

Gemäß einer Weiterbildung wird vor dem Senden der Kopplungsnachricht von dem Geldautomat eine Informationsnachricht ausgesendet, die repräsentativ dafür ist, dass der Geldautomat in der Lage ist, über die BLE-Verbindung den ersten String zu senden.

Gemäß einer Weiterbildung ändern sich infolge einer Bedienung des Geldautomaten durch den Nutzer die Bedienmöglichkeiten, die der Nutzer aktuell an dem Geldautomaten hat, und/oder der Inhalt, den der Geldautomat aktuell auf der ersten Anzeigeeinheit darstellt, und von dem Geldautomaten wird ein zweiter String, der repräsentativ dafür ist, welche Bedienmöglichkeiten der Nutzer aktuell an dem Geldautomaten hat und/oder was der Geldautomat aktuell auf der ersten Anzeigeeinheit darstellt, über die BLE-Verbindung an das Mobiltelefon des Nutzers gesendet.

Gemäß einer Weiterbildung wird am Ende der Bedienung des Geldautomaten durch den Nutzer die BLE-Verbindung zwischen dem Geldautomaten und dem Mobiltelefon getrennt und von dem Geldautomaten wird erneut die Informationsnachricht ausgesendet.

Eine Aufgabe der Erfindung wird gelöst durch einen Geldautomat aufweisend eine erste Anzeigeeinheit, eine erste Eingabeeinheit, eine Kartenleseeinheit, eine Geldausgabeeinheit, eine erste Steuereinheit, die mit der ersten Anzeigeeinheit, der ersten Eingabeeinheit, der Kartenleseeinheit, und der Geldausgabeeinheit elektrisch verbunden ist und die dazu ausgebildet ist, das im Vorhergehenden erläuterte Verfahren zum Betreiben eines Geldautomaten abzuarbeiten.

Eine Aufgabe der Erfindung wird gelöst durch ein Verfahren zum Betreiben eines Mobiltelefons, bei dem: das Mobiltelefon über eine BLE-Verbindung mit einem Geldautomaten gekoppelt wird; ein erster String, der von dem Geldautomaten gesendet wird und dessen Inhalt sich auf die Bedienung des Geldautomaten bezieht, über die BLE-Verbindung von dem Mobiltelefon empfangen wird; und von dem Mobiltelefon dem Nutzer der erste String mittels einer Text-to-Speech Funktion vorgelesen wird und der Nutzer den Geldautomat entsprechend bedienen kann.

Gemäß einer Weiterbildung wird vor der Kopplung des Geldautomaten mit dem Mobiltelefon von dem Mobiltelefon eine Kopplungsnachricht an den Geldautomaten gesendet, die repräsentativ dafür ist, dass das Mobiltelefon mit dem Geldautomaten gekoppelt werden soll.

Gemäß einer Weiterbildung wird vor dem Senden der Kopplungsnachricht eine Informationsnachricht des Geldautomaten empfangen, die repräsentativ dafür ist, dass der Geldautomat in der Lage ist, über die BLE-Verbindung den String zu senden. Von dem Mobiltelefon wird in Reaktion auf das Empfangen der Informationsnachricht die Kopplungsnachricht gesendet.

Gemäß einer Weiterbildung ändern sich infolge der Bedienung des Geldautomaten durch den Nutzer die Bedienmöglichkeiten, die der Nutzer aktuell an dem Geldautomaten hat, und/oder der Inhalt, den der Geldautomat aktuell auf der ersten Anzeigeeinheit darstellt, und ein zweiter String, der von dem Geldautomaten gesendet wird und der repräsentativ dafür ist, welche Bedienmöglichkeiten der Nutzer an dem Geldautomaten aktuell hat und/oder der Inhalt, den der Geldautomat aktuell auf der ersten Anzeigeeinheit darstellt, wird über die BLE-Verbindung von dem Mobiltelefon empfangen. Von dem Mobiltelefon wird dem Nutzer der zweite String mittels der Text-to-Speech Funktion vorgelesen, wobei der Nutzer aufgrund des Vorlesens des zweiten Strings weiß, welche Bedienmöglichkeiten er aktuell hat, den Geldautomat zu bedienen, und/oder welchen Inhalt der Geldautomat aktuell auf der ersten Anzeigeeinheit darstellt, und dann erneut den Geldautomat bedienen kann.

Eine Aufgabe der Erfindung wird gelöst durch ein Mobiltelefon aufweisend eine zweite Anzeigeeinheit, eine zweite Eingabeeinheit, eine Ausgabeeinheit, eine Sende/EmpfangsEinheit, eine zweite Steuereinheit, die mit der zweiten Anzeigeeinheit, der zweiten Eingabeeinheit, der Ausgabeeinheit und der Sende/Empfangs-Einheit elektrisch verbunden ist und die dazu ausgebildet ist, das im Vorhergehenden erläuterte Verfahren zum Betreiben eines Mobiltelefons abzuarbeiten.

Ausführungsbeispiele der Erfindung sind in den Figuren dargestellt und werden im Folgenden näher erläutert.

Es zeigen:
- Figur 1: Ausführungsbeispiele eines Geldautomaten und eines Mobiltelefons;
- Figur 2: ein Ablaufdiagramm eines Ausführungsbeispiels eines Verfahrens zum Bedienen eines Geldautomaten,
- Figur 3: ein Ablaufdiagramm eines Ausführungsbeispiels eines Verfahrens zum Betreiben eines Geldautomaten,
- Figur 4: ein Ablaufdiagramm eines Ausführungsbeispiels eines Verfahrens zum Betreiben eines Mobiltelefons.

In der folgenden ausführlichen Beschreibung wird auf die beigefügten Zeichnungen Bezug genommen, die Teil dieser Beschreibung bilden und in denen zur Veranschaulichung spezifische Ausführungsbeispiele gezeigt sind, in denen die Erfindung ausgeübt werden kann. Da Komponenten von Ausführungsbeispielen in einer Anzahl verschiedener Orientierungen positioniert werden können, dient die Richtungsterminologie zur Veranschaulichung und ist auf keinerlei Weise einschränkend. Es versteht sich, dass andere Ausführungsbeispiele benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen Ausführungsbeispiele miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert. In den Figuren sind identische oder ähnliche Elemente mit identischen Bezugszeichen versehen, soweit dies zweckmäßig ist.

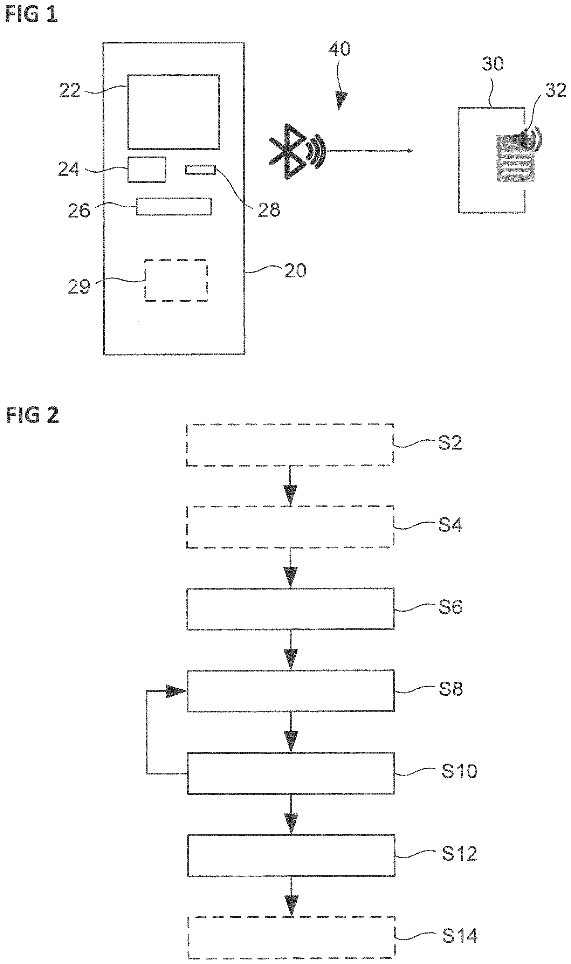

**Fig. 1** zeigt Ausführungsbeispiele eines Geldautomaten 20 und eines Mobiltelefons 30. Der Geldautomat 20 weist eine erste Anzeigeeinheit 22, eine erste Eingabeeinheit 24, eine Geldausgabeeinheit 26, eine Kartenleseeinheit 28 und eine erste Steuereinheit 29 auf. Die erste Steuereinheit 29 ist mit der ersten Anzeigeeinheit 22, der ersten Eingabeeinheit 24, der Geldausgabeeinheit 26 und der Kartenleseeinheit 28 elektrisch verbunden. Mittels des Geldautomaten 20 kann von einem Nutzer des Geldautomaten 20 Bargeld abgehoben werden. Optional kann der Geldautomat 20 so ausgebildet sein, dass mittels des Geldautomaten 20 Bargeld auf ein Konto des Nutzers eingezahlt werden kann.

Die Anzeigeeinheit 22 ist beispielsweise ein Display, insbesondere ein LCD-Display oder ein OLED-Display. Die Anzeigeeinheit 22 dient dazu, dem Nutzer Informationen bezüglich der Bedienung des Geldautomaten bereitzustellen. Beispielsweise können auf der Anzeigeeinheit 22 Bedienfelder zum Bedienen des Geldautomaten 20 angezeigt werden. Falls die Anzeigeeinheit 22 ein Touchscreen ist, so kann der Geldautomat 20 direkt mittels Drückens der entsprechenden Bedienfelder bedient werden. Alternativ oder zusätzlich können die Bedienfelder direkt neben Schaltflächen, die in den Figuren nicht gezeigt sind und die außerhalb der Anzeigeeinheit 22 angeordnet sind, angezeigt werden, sodass die Bedienfelder lediglich als Beschriftungen der Schaltflächen dienen. In anderen Worten kann die Anzeigeeinheit 22 dazu dienen, Schaltflächen außerhalb der Anzeigeeinheit 22 zu beschriften. Dies ermöglicht, dass in unterschiedlichen Betriebszuständen des Geldautomaten 20 die Schaltflächen unterschiedlich beschriftet werden können und entsprechend andere Funktionen auslösen können. Ferner können die Informationen bezüglich der Bedienung des Geldautomaten 20 Informationen aufweisen, die sich lediglich indirekt auf die Bedienung des Geldautomaten 20 beziehen, beispielsweise Informationen über das Konto des Nutzers, beispielsweise die Kontonummer und/oder den Kontostand. Nicht zuletzt kann die Anzeigeeinheit 22 dazu genutzt werden, Werbung darzustellen.

Die Eingabeeinheit 24 ist beispielsweise eine Tastatur. Die Eingabeeinheit 24 dient beispielsweise dazu, den Geldautomaten 20 zu bedienen. Beispielsweise können über die Eingabeeinheit 24 eine Geheimzahl und/oder ein abzuhebender Geldbetrag eingegeben werden. Die Eingabeeinheit 24 kann alternativ oder zusätzlich zu den im Vorhergehenden erwähnten Schaltflächen angeordnet sein. Falls die Anzeigeeinheit 22 ein Touchscreen ist, so können die Eingabeeinheit 24 und die Anzeigeeinheit 22 in einer gemeinsamen Anzeigevorrichtung integriert sein.

Die Geldausgabeeinheit 26 dient dazu, dem Nutzer Geld auszuzahlen. Falls der Geldautomat 20 so ausgebildet ist, dass mittels des Geldautomaten 20 Geld auf das Konto des Nutzers eingezahlt werden kann, so kann die Geldausgabeeinheit 26 auch dazu dienen, das Bargeld in den Geldautomaten 20 einzuführen. Alternativ dazu kann der Geldautomat 20 ein separates Fach zum Einzahlen von Bargeld aufweisen.

Die Kartenleseeinheit 28 dient dazu, eine Geldkarte des Nutzers aufzunehmen und zu lesen. Mittels der Geldkarte kann der Nutzer dem Geldautomaten 20 mitteilen, welches Konto der Nutzer hat. Zusammen mit einer in die Eingabeeinheit 24 einzugebenden Geheimzahl dient die Geldkarte dazu, den Zugriff auf das Konto des Nutzers freizugeben oder zu unterbinden. Am Ende der Bedienung des Geldautomaten 20 durch den Nutzer gibt die Kartenleseeinheit 28 die Geldkarte wieder frei. Die Geldkarte kann beispielsweise eine EC-Karte oder eine Kreditkarte sein.

Die Steuereinheit 29 dient dazu, die Anzeigeeinheit 22 so anzusteuern, dass sie die Informationen bezüglich der Bedienung des Geldautomaten 20 anzeigt; die Eingaben des Nutzers über die Schaltflächen und/oder die Eingabeeinheit 24 zu erfassen und entsprechende Funktionen zu starten oder abzubrechen; die Geldausgabeeinheit 26 so anzusteuern, dass sie dem Nutzer den gewünschten Geldbetrag auszahlt; und/oder die mittels der Kartenleseeinheit 28 erfassten Daten der Geldkarte mit der Geheimzahl und/oder dem Konto des Nutzers abzugleichen.

Das Mobiltelefon 30 kann beispielsweise ein Smartphone oder ein herkömmliches Mobiltelefon sein. Das Mobiltelefon 30 weist eine zweite Anzeigeeinheit, beispielsweise einen Bildschirm, zum Anzeigen von Informationen, eine zweite Eingabeeinheit zum Eingeben von Daten, eine Ausgabeeinheit 32, eine Sende/Empfangs-Einheit und eine zweite Steuereinheit auf. Der Bildschirm und die zweite Eingabeeinheit können in einem gemeinsamen Touchscreen integriert sein. Die Sende/EmpfangsEinheit dient zum Senden und Empfangen von Daten. Die zweite Steuereinheit ist mit der zweiten Anzeigeeinheit, der zweiten Eingabeeinheit, der Ausgabeeinheit 32 und der Sende/EmpfangsEinheit elektrisch gekoppelt. Die zweite Steuereinheit dient dazu, die zweite Anzeigeeinheit, die zweite Eingabeeinheit, die Ausgabeeinheit 32 und die Sende/Empfangs-Einheit zu betreiben.

Die Ausgabeeinheit 32 dient zum Ausgeben von Audio-Informationen. Die Ausgabeeinheit 32 kann beispielsweise ein Lautsprecher des Mobiltelefons 30 sein. Alternativ dazu kann die Ausgabeeinheit 32 ein Kopfhörer sein, der mit dem Mobiltelefon 30 gekoppelt werden kann und der dann dazu dienen kann, die Audio-Informationen des Mobiltelefons 30 akustisch wiederzugeben. Die Kopplung des Mobiltelefons 30 mit dem Kopfhörer kann kabelgebunden oder kabellos sein. Im Falle einer kabellosen Verbindung kann die Kopplung des Mobiltelefons 30 mit dem Kopfhörer beispielsweise mittels Bluetooth erfolgen.

Der Geldautomat 20, insbesondere die erste Steuereinheit 29, und das Mobiltelefon 30 sind so ausgebildet, dass der Geldautomat 20 über eine Bluetooth-Low-Energy(BLE)-Verbindung 40 mit dem Mobiltelefon des Nutzers des Geldautomaten 20 gekoppelt werden kann, dass von dem Geldautomat 20 ein erster String, dessen Inhalt sich auf die Bedienung des Geldautomaten 20 bezieht, über die BLE-Verbindung 40 an das Mobiltelefon 30 des Nutzers gesendet werden kann, und dass von dem Mobiltelefon 30 dem Nutzer der Inhalt des ersten Strings mittels einer Text-to-Speech Funktion des Mobiltelefons 30 vorgelesen werden kann und der Nutzer den Geldautomat 20 entsprechend bedienen kann.

Dieses Verfahren zum Bedienen des Geldautomaten 20, das entsprechende Verfahren zum Betreiben des Geldautomaten 20 und das entsprechende Verfahren zum Betreiben des Mobiltelefons 30 sind im Folgenden anhand der Figuren 2, 3 und 4 näher erläutert.

**Fig. 2** zeigt ein Ablaufdiagramm eines Ausführungsbeispiels eines Verfahrens zum Bedienen eines Geldautomaten 20, insbesondere des im Vorhergehenden erläuterten Geldautomaten 20.

Das Verfahren zum Bedienen des Geldautomaten 20 ermöglicht auf einfache und kostengünstige Weise eine Nutzung des Geldautomaten mittels Audio-Informationen. Insbesondere kann eine BLE-Verbindung zwischen dem Geldautomaten 20 und dem Mobiltelefon 30 hergestellt werden, um Audio-Informationen und/oder -Anweisungen zur Bedienung des Automaten zu geben, beispielsweise einem visuell beeinträchtigten Nutzer. Der Nutzer muss dafür keine Kopfhörer, insbesondere keine mit Klinkenstecker, mit sich führen, sondern nur sein Mobiltelefon 30. Die Anweisungen können direkt mittels des Lautsprechers des Mobiltelefons 30 oder, falls vorhanden, mittels des Kopfhörers, der von dem Mobiltelefon 30 mit den entsprechenden Audio-Dateien versorgt wird, wiedergegeben werden.

In einem optionalen Schritt S2 kann von dem Geldautomaten 20 eine Informationsnachricht ausgesendet werden, die repräsentativ dafür ist, dass der Geldautomat 20 in der Lage ist, über eine Bluetooth-Low-Energy(BLE)-Verbindung 40 einen String zu senden, dessen Inhalt sich auf die Bedienung des Geldautomaten 20 bezieht. Die Informationsnachricht kann auch als BLE-Werbung oder als BLE-Advertisment bezeichnet werden. Die Informationsnachricht kann in Form von Informationspaketen, beispielsweise in Form von Advertisment-Paketen, versendet werden. Die Informationsnachricht kann beispielsweise so lange und/oder so oft gesendet werden, bis eine Kopplung des Geldautomaten 20 mit dem Mobiltelefon 30 erfolgt.

In einem optionalen Schritt S4 kann von dem Mobiltelefon 30 gegebenenfalls die Informationsnachricht empfangen werden. Zum Empfangen der Informationsnachricht und zum Verarbeiten der Informationsnachricht kann auf dem Mobiltelefon 30 eine entsprechende Anwendung, insbesondere eine Applikation, kurz App, installiert sein und ausgeführt werden. Die Anwendung kann dem Nutzer signalisieren, dass sie die Informationsnachricht empfangen hat und/oder dass der Geldautomat 20 in der Lage ist, über die BLE-Verbindung 40 den String zu senden, dessen Inhalt sich auf die Bedienung des Geldautomaten 20 bezieht.

Außerdem kann in dem Schritt S4 eine Kopplungsnachricht an den Geldautomaten 20 gesendet werden, die repräsentativ dafür ist, dass das Mobiltelefon 30 mit dem Geldautomaten 20 gekoppelt werden soll. Falls in dem Schritt S2 von dem Geldautomaten 20 die Informationsnachricht ausgesendet wird und diese Informationsnachricht von dem Mobiltelefon 30 empfangen wird, so kann die Kopplungsnachricht von dem Mobiltelefon 30 in Reaktion auf das Empfangen der Informationsnachricht ausgesendet werden.

Die Informationsnachricht und/oder die Kopplungsnachricht können Teile eines herkömmlichen BLE-Standards und/oder eines herkömmlichen für BLE geeigneten Protokolls sein. Alternativ dazu können die Informationsnachricht und/oder die Kopplungsnachricht die Kopplung des Geldautomaten 20 mit dem Mobiltelefon 30 gemäß dem herkömmlichen BLE-Standard bzw. dem herkömmlichen für BLE geeigneten Protokoll initiieren.

In einem Schritt S6 wird der Geldautomat 20 über die BLE-Verbindung 40 mit dem Mobiltelefon 30 des Nutzers des Geldautomaten 20 gekoppelt. Diese Kopplung kann auch als Pairing bezeichnet werden. Die Kopplung des Geldautomaten 20 mit dem Mobiltelefon 30 kann über herkömmliche BLE-Standards und/oder über ein herkömmliches für BLE geeignetes Protokoll erfolgen. Gegebenenfalls können die Informationsnachricht und/oder die Kopplungsnachricht für diese Kopplung verwendet werden oder zusätzlich zu dieser Kopplung gesendet bzw. empfangen werden. Auf Seite des Mobiltelefons 30 kann die Kopplung mittels der Anwendung erfolgen. Außerdem kann in dem Schritt S6 das Aussenden der Informationsnachricht beendet werden, damit kein anderes Mobiltelefon die Informationsnachricht erhalten kann, während das Mobiltelefon 30 mit dem Geldautomaten 20 gekoppelt ist.

Sobald der Geldautomat 20 über die BLE-Verbindung 40 mit dem Mobiltelefon 30 gekoppelt ist, wird in einem Schritt S8 von dem Geldautomaten 20 ein String, beispielsweise ein erster String, dessen Inhalt sich auf die Bedienung des Geldautomaten 20 bezieht, über die BLE-Verbindung 40 an das Mobiltelefon 30 des Nutzers gesendet. Der erste String und gegebenenfalls weitere Strings können beispielsweise mittels eines proprietären BLE-Gatt-Services gesendet werden. Ein String ist grundsätzlich eine Zeichenkette und der Inhalt des Strings ist Text. Der Inhalt des ersten Strings kann aufweisen: Informationen bezüglich der Bedienung des Geldautomaten 20, beispielsweise Anweisungen zur Nutzung der aktuell auf der Anzeigeeinheit 22 angezeigten Oberfläche; und/oder Informationen, die sich lediglich indirekt auf die Bedienung des Geldautomaten 20 beziehen, beispielsweise Informationen über das Konto des Nutzers, beispielsweise die Kontonummer und/oder den Kontostand.

In einem Schritt S10 wird von dem Mobiltelefon 30, insbesondere mittels der Anwendung und der Ausgabeeinheit 32, der String, beispielsweise der erste String, empfangen und dem Nutzer der Inhalt des ersten Strings mittels einer Text-to-Speech Funktion des Mobiltelefons 30 vorgelesen. Die Text-to-Speech Funktion kann Teil des Betriebssystems des Mobiltelefons 30 oder Teil der Anwendung sein.

Nachdem dem Nutzer die Information bezüglich der Bedienung des Geldautomaten 20 vorgelesen wurden, kann der Nutzer den Geldautomat 20 geeignet bedienen. In der Regel ändern sich durch die Bedienung des Geldautomaten 20 die Informationen, die auf der Anzeigeeinheit 22 dargestellt werden, und die Möglichkeiten, den Geldautomaten 20 zu bedienen. Beispielsweise kann dem Kunden mittels der Anzeigeeinheit 22 zunächst eine Auswahlmöglichkeit angezeigt werden, gemäß der der Kunde auswählen kann, ob er seinen Kontostand wissen möchte oder ob er Geld abheben möchte. Die entsprechenden Informationen können in dem ersten String codiert sein. Falls der Kunde Geld abheben möchte und den Geldautomaten entsprechend bedient, kann dem Kunden mittels der Anzeigeeinheit 22 als nächstes eine Auswahlmöglichkeit angezeigt werden, gemäß der der Kunde auswählen kann, wie viel Geld er abheben möchte. In diesem Fall kann der Schritt S8 erneut abgearbeitet werden, wobei bei dem erneuten Abarbeiten des Schritts S8 ein zweiter String, der repräsentativ dafür ist, welche Bedienmöglichkeiten der Nutzer aktuell an dem Geldautomat 20 hat und/oder welche Informationen der Geldautomat aktuell auf der ersten Anzeigeeinheit 22 darstellt, über die BLE-Verbindung 40 an das Mobiltelefon 30 des Nutzers gesendet wird.

Nachfolgend kann der Schritt S10 erneut abgearbeitet werden, wobei bei dem erneuten Abarbeiten des Schritts S10 von dem Mobiltelefon 30 dem Nutzer der zweite String mittels der Text-to-Speech Funktion vorgelesen wird, wobei der Nutzer aufgrund des Vorlesens des zweiten Strings weiß, welche Bedienmöglichkeiten er aktuell an dem Geldautomaten 20 hat und/oder was der Geldautomat 20 aktuell auf der ersten Anzeigeeinheit 22 darstellt. Nachfolgend kann der Nutzer erneut den Geldautomat 20 bedienen. Auf diese Weise können die Schritte S8 und die Schritte S10 mehrmals hintereinander mit unterschiedlichen auf die aktuellen Bedienmöglichkeiten und/oder angezeigten Informationen abgestimmten Strings abgearbeitet werden, bis der Nutzer die Bedienung des Geldautomaten 20 abbricht oder der Bedienvorgang automatisch beendet wird.

In einem Schritt S12 wird am Ende der Bedienung des Geldautomaten 20 durch den Nutzer die BLE-Verbindung 40 zwischen dem Geldautomaten 20 und dem Mobiltelefon 30 getrennt, beispielsweise gemäß dem herkömmlichen BLE-Standard und/oder dem herkömmlichen BLE-Protokoll.

In einem optionalen Schritt S14 kann von dem Geldautomaten 20 erneut die Informationsnachricht ausgesendet werden. Insbesondere kann die Informationsnachricht so lange und/oder so oft ausgesendet werden, bis der Geldautomat 20 erneut mit dem Mobiltelefon 30 oder mit einem anderen Mobiltelefon gekoppelt wird.

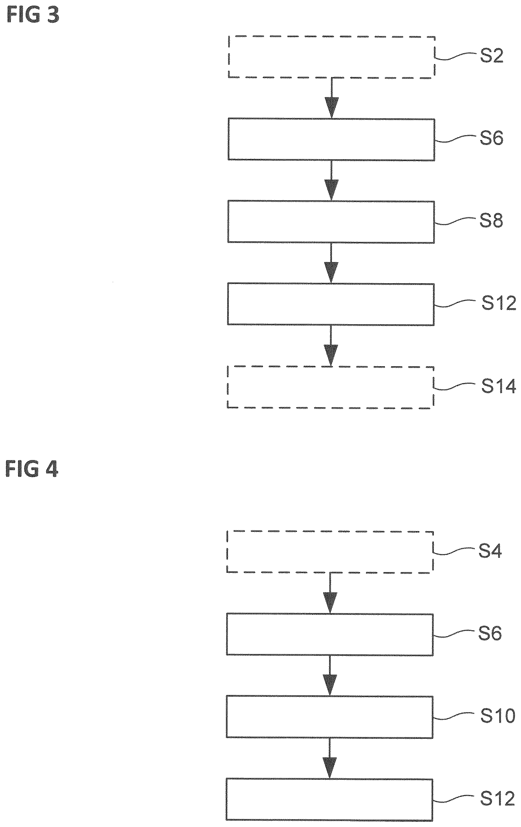

**Fig. 3** zeigt ein Ablaufdiagramm eines Ausführungsbeispiels eines Verfahrens zum Betreiben eines Geldautomaten, beispielsweise des im Vorhergehenden erläuterten Geldautomaten 20. Das Verfahren zum Betreiben des Geldautomaten 20 ist Teil des im Vorhergehenden erläuterten Verfahrens zum Bedienen des Geldautomaten 20, wobei sich das Verfahren zum Betreiben des Geldautomaten 20 ausschließlich auf die Schritte bezieht, die von dem Geldautomaten 20, insbesondere der ersten Steuereinheit 29 des Geldautomaten 20, abgearbeitet werden.

In dem optionalen Schritt S2 kann von dem Geldautomaten 20 die Informationsnachricht ausgesendet werden, die repräsentativ dafür ist, dass der Geldautomat 20 in der Lage ist, über die BLE-Verbindung 40 den String zu senden, dessen Inhalt sich auf die Bedienung des Geldautomaten 20 bezieht. Die Informationsnachricht kann beispielsweise so lange und/oder so oft gesendet werden, bis eine Kopplung des Geldautomaten 20 mit dem Mobiltelefon 30 erfolgt.

In dem Schritt S6 wird der Geldautomat 20 über die BLE-Verbindung 40 mit dem Mobiltelefon 30 des Nutzers des Geldautomaten 20 gekoppelt. Außerdem kann in dem Schritt S6 das Aussenden der Informationsnachricht beendet werden, damit kein anderes Mobiltelefon die Informationsnachricht erhalten kann, während das Mobiltelefon 30 mit dem Geldautomaten 20 gekoppelt ist.

Sobald der Geldautomat 20 über die BLE-Verbindung 40 mit dem Mobiltelefon 30 gekoppelt ist, wird in dem Schritt S8 von dem Geldautomaten 20 ein String, beispielsweise ein erster String, dessen Inhalt sich auf die Bedienung des Geldautomaten 20 bezieht, über die BLE-Verbindung 40 an das Mobiltelefon 30 des Nutzers gesendet.

Nachdem dem Nutzer die Information bezüglich der Bedienung des Geldautomaten 20 vorgelesen wurden, kann der Nutzer den Geldautomat 20 geeignet bedienen. In der Regel ändern sich durch die Bedienung des Geldautomaten 20 die Informationen, die auf der Anzeigeeinheit 22 dargestellt werden, und die Möglichkeiten, den Geldautomaten 20 zu bedienen. In diesem Fall kann der Schritt S8 erneut abgearbeitet werden, wobei bei dem erneuten Abarbeiten des Schritts S8 ein zweiter String, der repräsentativ dafür ist, welche Bedienmöglichkeiten der Nutzer aktuell an dem Geldautomat 20 hat und/oder welche Informationen der Geldautomat 20 aktuell auf der ersten Anzeigeeinheit 22 darstellt, über die BLE-Verbindung 40 an das Mobiltelefon 30 des Nutzers gesendet wird. Auf diese Weise kann der Schritt S8 mehrmals hintereinander mit unterschiedlichen auf die aktuellen Bedienmöglichkeiten und/oder angezeigten Informationen abgestimmten Strings abgearbeitet werden, bis der Nutzer die Bedienung des Geldautomaten 20 abbricht oder der Bedienvorgang automatisch beendet wird.

In dem Schritt S12 wird am Ende der Bedienung des Geldautomaten 20 durch den Nutzer die BLE-Verbindung 40 zwischen dem Geldautomaten 20 und dem Mobiltelefon 30 getrennt.

In dem optionalen Schritt S14 kann von dem Geldautomat 20 erneut die Informationsnachricht ausgesendet werden.

**Fig. 4** zeigt ein Ablaufdiagramm eines Ausführungsbeispiels eines Verfahrens zum Betreiben eines Mobiltelefons, beispielsweise des im Vorhergehenden erläuterten Mobiltelefons 30. Das Verfahren zum Betreiben des Mobiltelefons 30 ist Teil des im Vorhergehenden erläuterten Verfahrens zum Bedienen des Geldautomaten 20, wobei sich das Verfahren zum Betreiben des Mobiltelefons 30 ausschließlich auf die Schritte bezieht, die von dem Mobiltelefon 30, insbesondere mittels der auf dem Mobiltelefon 30 installierten Anwendung, abgearbeitet werden.

In dem optionalen Schritt S4 kann von dem Mobiltelefon 30 gegebenenfalls die Informationsnachricht empfangen werden. Die Anwendung kann dem Nutzer signalisieren, dass sie die Informationsnachricht empfangen hat und/oder dass der Geldautomat 20 in der Lage ist, über die BLE-Verbindung 40 den String zu senden, dessen Inhalt sich auf die Bedienung des Geldautomaten 20 bezieht. Außerdem kann in dem Schritt S4 die Kopplungsnachricht an den Geldautomaten 20 gesendet werden. Die Kopplungsnachricht kann von dem Mobiltelefon 30 in Reaktion auf das Empfangen der Informationsnachricht ausgesendet werden.

In dem Schritt S6 wird der Geldautomat 20 über die BLE-Verbindung 40 mit dem Mobiltelefon 30 des Nutzers des Geldautomaten 20 gekoppelt. Die Kopplung kann mittels der Anwendung erfolgen.

In dem Schritt S10 wird von dem Mobiltelefon 30, insbesondere mittels der Anwendung und der Ausgabeeinheit 32, der String, beispielsweise der erste String, empfangen und dem Nutzer der Inhalt des ersten Strings mittels der Text-to-Speech Funktion des Mobiltelefons 30 vorgelesen.

Nachdem dem Nutzer die Informationen bezüglich der Bedienung des Geldautomaten 20 vorgelesen wurden, kann der Nutzer den Geldautomat 20 geeignet bedienen. In der Regel ändern sich durch die Bedienung des Geldautomaten 20 die Informationen, die auf der Anzeigeeinheit 22 dargestellt werden, und die Möglichkeiten, den Geldautomaten 20 zu bedienen. In diesem Fall kann der Schritt S10 erneut abgearbeitet werden, wobei bei dem erneuten Abarbeiten des Schritts S10 von dem Mobiltelefon 30 der zweite String empfangen wird und dem Nutzer der zweite String mittels der Text-to-Speech Funktion vorgelesen wird.

In einem Schritt S12 wird am Ende der Bedienung des Geldautomaten 20 durch den Nutzer die BLE-Verbindung 40 zwischen dem Geldautomaten 20 und dem Mobiltelefon 30 getrennt, beispielsweise gemäß dem herkömmlichen BLE-Standard und/oder dem herkömmlichen BLE-Protokoll.

Die Erfindung ist nicht auf die angegebenen Ausführungsbeispiele beschränkt, sofern diese innerhalb des durch die unabhängigen Ansprüche definierten Schutzumfangs liegen. Beispielsweise können der Geldautomat 20 und/oder das Mobiltelefon 30 mehr oder weniger der dargestellten Komponenten aufweisen. Ferner können die im Vorhergehenden erläuterten Verfahren mehr oder weniger der dargestellten Schritte aufweisen. Ferner kann die Reihenfolge der im Vorhergehenden erläuterten Schritte innerhalb der entsprechenden Verfahren geändert werden.

### BEZUGSZEICHENLISTE

- 20: Geldautomat
- 22: erste Anzeigeeinheit
- 24: erste Eingabeeinheit
- 26: Geldausgabeeinheit
- 28: Kartenleseeinheit
- 29: erste Steuereinheit
- 30: Mobiltelefon
- 32: Ausgabeeinheit
- 40: BLE-Verbindung
- S2 bis S14: Schritte zwei bis vierzehn

## Patentansprüche

1. Verfahren zum Bedienen eines Geldautomaten (20), bei dem
der Geldautomat (20) über eine Bluetooth-Low-Energy-Verbindung (40) mit einem Mobiltelefon (30) eines Nutzers des Geldautomaten (20) gekoppelt wird,
von dem Geldautomaten (20) ein erster String, dessen Inhalt sich auf die Bedienung des Geldautomaten (20) bezieht, über die Bluetooth-Low-Energy-Verbindung (40) an das Mobiltelefon (30) des Nutzers gesendet wird,
von dem Mobiltelefon (30) dem Nutzer der Inhalt des ersten Strings mittels einer Text-to-Speech Funktion des Mobiltelefons (30) vorgelesen wird und der Nutzer den Geldautomat (20) entsprechend bedienen kann.

2. Verfahren nach Anspruch 1, bei dem
vor der Kopplung des Geldautomaten (20) mit dem Mobiltelefon (30) von dem Mobiltelefon (30) eine Kopplungsnachricht an den Geldautomaten (20) gesendet wird, die repräsentativ dafür ist, dass das Mobiltelefon (30) mit dem Geldautomaten (20) gekoppelt werden soll, und
von dem Geldautomaten (20) in Reaktion auf das Empfangen der Kopplungsnachricht die Kopplung mit dem Mobiltelefon (30) initiiert wird.

3. Verfahren nach Anspruch 2, bei dem
vor dem Senden der Kopplungsnachricht von dem Geldautomaten (20) eine Informationsnachricht ausgesendet wird, die repräsentativ dafür ist, dass der Geldautomat (20) in der Lage ist, über die Bluetooth-Low-Energy-Verbindung (40) den String zu senden, und
von dem Mobiltelefon (30) in Reaktion auf das Empfangen der Informationsnachricht die Kopplungsnachricht gesendet wird.

4. Verfahren nach einem der vorstehenden Ansprüche, bei dem
infolge der Bedienung des Geldautomaten (20) durch den Nutzer sich die Bedienmöglichkeiten, die der Nutzer aktuell an dem Geldautomat (20) hat, und/oder die Informationen, die der Geldautomat (20) aktuell auf der ersten Anzeigeeinheit (22) darstellt, ändern
von dem Geldautomat (20) ein zweiter String, der repräsentativ dafür ist, welche Bedienmöglichkeiten der Nutzer aktuell an dem Geldautomat (20) hat und/oder welche Informationen der Geldautomat (20) aktuell auf der ersten Anzeigeeinheit (22) darstellt, über die Bluetooth-Low-Energy-Verbindung (40) an das Mobiltelefon (30) des Nutzers gesendet wird,
von dem Mobiltelefon (30) dem Nutzer der zweite String mittels der Text-to-Speech Funktion vorgelesen wird, wobei der Nutzer aufgrund des Vorlesens des zweiten Strings weiß, welche Bedienmöglichkeiten er aktuell an dem Geldautomaten (20) hat und/oder was der Geldautomat (20) aktuell auf der ersten Anzeigeeinheit (22) darstellt, und der Nutzer dann erneut den Geldautomat (20) bedienen kann.

5. Verfahren nach einem der Ansprüche 3 oder 4, bei dem
am Ende der Bedienung des Geldautomaten (20) durch den Nutzer die Bluetooth-Low-Energy-Verbindung (40) zwischen dem Geldautomaten (20) und dem Mobiltelefon (30) getrennt wird, und
von dem Geldautomat (20) erneut die Informationsnachricht ausgesendet wird.

6. Verfahren zum Betreiben eines Geldautomaten (20), bei dem
der Geldautomat (20) über eine Bluetooth-Low-Energy-Verbindung (40) mit einem Mobiltelefon (30) eines Nutzers des Geldautomaten (20) gekoppelt wird,
von dem Geldautomat (20) ein erster String, dessen Inhalt sich auf die Bedienung des Geldautomaten (20) bezieht, über die Bluetooth-Low-Energy-Verbindung (40) an das Mobiltelefon (30) des Nutzers gesendet wird.

7. Verfahren nach Anspruch 6, bei dem
vor der Kopplung des Geldautomaten (20) mit dem Mobiltelefon (30) der Geldautomat (20) von dem Mobiltelefon (30) eine Kopplungsnachricht empfängt, die repräsentativ dafür ist, dass das Mobiltelefon (30) mit dem Geldautomaten (20) gekoppelt werden soll, und
von dem Geldautomaten (20) in Reaktion auf das Empfangen der Kopplungsnachricht die Kopplung mit dem Mobiltelefon (30) initiiert wird.

8. Verfahren nach Anspruch 7, bei dem
vor dem Senden der Kopplungsnachricht von dem Geldautomaten (20) eine Informationsnachricht ausgesendet wird, die repräsentativ dafür ist, dass der Geldautomat (20) in der Lage ist, über die Bluetooth-Low-Energy-Verbindung (40) den ersten String zu senden.

9. Verfahren nach einem der Ansprüche 6 bis 8, bei dem
infolge einer Bedienung des Geldautomaten (20) durch den Nutzer sich die Bedienmöglichkeiten, die der Geldautomat (20) dem Nutzer aktuell bietet, und/oder der Inhalt, den der Geldautomat (20) aktuell auf der ersten Anzeigeeinheit (22) darstellt, ändern, und
von dem Geldautomaten (20) ein zweiter String, der repräsentativ dafür ist, welche Bedienmöglichkeiten der Nutzer aktuell an dem Geldautomaten (20) hat und/oder was der Geldautomat (20) aktuell auf der ersten Anzeigeeinheit (22) darstellt, über die Bluetooth-Low-Energy-Verbindung (40) an das Mobiltelefon (30) des Nutzers gesendet wird.

10. Verfahren nach einem der Ansprüche 6 bis 9, bei dem
am Ende der Bedienung des Geldautomaten (20) durch den Nutzer die Bluetooth-Low-Energy-Verbindung (40) zwischen dem Geldautomaten (20) und dem Mobiltelefon (30) getrennt wird, und
von dem Geldautomaten (20) erneut die Informationsnachricht ausgesendet wird.

11. Geldautomat (20) aufweisend
eine erste Anzeigeeinheit (22),
eine erste Eingabeeinheit (24),
eine Kartenleseeinheit (28),
eine Geldausgabeeinheit (26),
eine erste Steuereinheit (29), die mit der ersten Anzeigeeinheit (22), der ersten Eingabeeinheit (24), der ersten Kartenleseeinheit (28), und der ersten Geldausgabeeinheit (26) elektrisch verbunden ist und die dazu ausgebildet ist, das Verfahren nach einem der Ansprüche 6 bis 9 abzuarbeiten.

12. Verfahren zum Betreiben eines Mobiltelefons (30), bei dem
das Mobiltelefon (30) über eine Bluetooth-Low-Energy-Verbindung (40) mit einem Geldautomaten (20) gekoppelt wird,
ein erster String, der von dem Geldautomaten (20) gesendet wird und dessen Inhalt sich auf die Bedienung des Geldautomaten (20) bezieht, über die Bluetooth-Low-Energy-Verbindung (40) von dem Mobiltelefon (30) empfangen wird,
von dem Mobiltelefon (30) dem Nutzer der erste String mittels einer Text-to-Speech Funktion vorgelesen wird und der Nutzer den Geldautomaten (20) entsprechend bedienen kann.

13. Verfahren nach Anspruch 12, bei dem vor der Kopplung des Geldautomaten (20) mit dem Mobiltelefon (30) von dem Mobiltelefon (30) eine Kopplungsnachricht an den Geldautomaten (20) gesendet wird, die repräsentativ dafür ist, dass das Mobiltelefon (30) mit dem Geldautomaten (20) gekoppelt werden soll.

14. Verfahren nach Anspruch 13, bei dem
vor dem Senden der Kopplungsnachricht eine Informationsnachricht des Geldautomaten (20) empfangen wird, die repräsentativ dafür ist, dass der Geldautomat (20) in der Lage ist, über die Bluetooth-Low-Energy-Verbindung (40) den String zu senden, und
von dem Mobiltelefon (30) in Reaktion auf das Empfangen der Informationsnachricht die Kopplungsnachricht gesendet wird.

15. Verfahren nach einem der Ansprüche 12 bis 14, bei dem
infolge der Bedienung des Geldautomaten (20) durch den Nutzer sich die Bedienmöglichkeiten, die der Geldautomat (20) dem Nutzer aktuell bietet, und/oder der Inhalt, den der Geldautomat aktuell auf der ersten Anzeigeeinheit (22) darstellt, ändern,
ein zweiter String, der von dem Geldautomaten (20) gesendet wird und der repräsentativ dafür ist, welche Bedienmöglichkeiten der Nutzer aktuell an dem Geldautomaten (20) hat und/oder was der Geldautomat (20) aktuell auf der ersten Anzeigeeinheit (22) darstellt, über die Bluetooth-Low-Energy-Verbindung (40) von dem Mobiltelefon (30) empfangen wird, und
von dem Mobiltelefon (30) dem Nutzer der zweite String mittels der Text-to-Speech Funktion vorgelesen wird, wobei der Nutzer aufgrund des Vorlesens des zweiten Strings weiß, welche Bedienmöglichkeiten er aktuell an dem Geldautomaten (20) hat und/oder was der Geldautomat (20) aktuell auf der ersten Anzeigeeinheit (22) darstellt, und dann erneut den Geldautomat (20) bedienen kann.

16. Mobiltelefon (30) aufweisend
eine zweite Anzeigeeinheit,
eine zweite Eingabeeinheit,
eine Ausgabeeinheit (32),
eine Sende/Empfangs-Einheit,
eine zweite Steuereinheit, die mit der zweiten Anzeigeeinheit, der zweiten Eingabeeinheit, der Ausgabeeinheit (32) und der Sende/Empfangs-Einheit elektrisch verbunden ist und die dazu ausgebildet ist, das Verfahren nach einem der Ansprüche 12 bis 15 abzuarbeiten.

## Claims

1. Method for using an automated teller machine (20), wherein
the automated teller machine (20) is coupled to a mobile phone (30) of a user of the automated teller machine (20) via a Bluetooth Low Energy connection (40),
the automated teller machine (20) transmits a first string, the content of which relates to the use of the automated teller machine (20), to the mobile phone (30) of the user via the Bluetooth Low Energy connection (40), the mobile phone (30) reads aloud the content of the first string to the user by means of a text-to-speech function of the mobile phone (30), and the user is able to use the automated teller machine (20) accordingly.

2. Method according to Claim 1, wherein
before the automated teller machine (20) is coupled to the mobile phone (30), the mobile phone (30) transmits a coupling message to the automated teller machine (20) that is representative of the mobile phone's (30) being intended to be coupled to the automated teller machine (20), and
the automated teller machine (20) responds to receiving the coupling message by initiating the coupling to the mobile phone (30).

3. Method according to Claim 2, wherein
before the coupling message is transmitted, the automated teller machine (20) sends an information message that is representative of the automated teller machine's (20) being capable of transmitting the string via the Bluetooth Low Energy connection (40), and
the mobile phone (30) responds to receiving the information message by transmitting the coupling message.

4. Method according to one of the preceding claims, wherein
the use of the automated teller machine (20) by the user results in the use options that the user currently has on the automated teller machine (20), and/or the information that the automated teller machine (20) currently presents on the first display unit (22), changing,
the automated teller machine (20) transmits a second string, which is representative of which use options the user currently has on the automated teller machine (20) and/or which information the automated teller machine (20) currently presents on the first display unit (22), to the mobile phone (30) of the user via the Bluetooth Low Energy connection (40),
the mobile phone (30) reads aloud the second string to the user by means of the text-to-speech function, the user knowing, based on the reading aloud of the second string, which use options he currently has on the automated teller machine (20) and/or what the automated teller machine (20) currently presents on the first display unit (22), and the user then being able to use the automated teller machine (20) again.

5. Method according to either of Claims 3 and 4, wherein
at the end of the use of the automated teller machine (20) by the user, the Bluetooth Low Energy connection (40) between the automated teller machine (20) and the mobile phone (30) is disconnected, and
the automated teller machine (20) sends the information message again.

6. Method for operating an automated teller machine (20), wherein
the automated teller machine (20) is coupled to a mobile phone (30) of a user of the automated teller machine (20) via a Bluetooth Low Energy connection (40),
the automated teller machine (20) transmits a first string, the content of which relates to the use of the automated teller machine (20), to the mobile phone (30) of the user via the Bluetooth Low Energy connection (40).

7. Method according to Claim 6, wherein
before the automated teller machine (20) is coupled to the mobile phone (30), the automated teller machine (20) receives from the mobile phone (30) a coupling message that is representative of the mobile phone's (30) being intended to be coupled to the automated teller machine (20), and
the automated teller machine (20) responds to receiving the coupling message by initiating the coupling to the mobile phone (30).

8. Method according to Claim 7, wherein
before the coupling message is transmitted by the automated teller machine (20), an information message is sent that is representative of the automated teller machine's (20) being capable of transmitting the first string via the Bluetooth Low Energy connection (40).

9. Method according to one of Claims 6 to 8, wherein
a use of the automated teller machine (20) by the user results in the use options that the automated teller machine (20) currently offers to the user, and/or the content that the automated teller machine (20) currently presents on the first display unit (22), changing, and the automated teller machine (20) transmits a second string, which is representative of which use options the user currently has on the automated teller machine (20) and/or what the automated teller machine (20) currently presents on the first display unit (22), to the mobile phone (30) of the user via the Bluetooth Low Energy connection (40).

10. Method according to one of Claims 6 to 9, wherein at the end of the use of the automated teller machine (20) by the user, the Bluetooth Low Energy connection (40) between the automated teller machine (20) and the mobile phone (30) is disconnected, and
the automated teller machine (20) sends the information message again.

11. Automated teller machine (20) comprising
a first display unit (22),
a first input unit (24),
a card reading unit (28),
a cash dispensing unit (26),
a first control unit (29), which is electrically connected to the first display unit (22), the first input unit (24), the first card reading unit (28), and the first cash dispensing unit (26) and which is designed to carry out the method according to one of Claims 6 to 9.

12. Method for operating a mobile phone (30), wherein the mobile phone (30) is coupled to an automated teller machine (20) via a Bluetooth Low Energy connection (40), a first string, which is transmitted by the automated teller machine (20) and the content of which relates to the use of the automated teller machine (20), is received by the mobile phone (30) via the Bluetooth Low Energy connection (40),
the mobile phone (30) reads aloud the first string to the user by means of a text-to-speech function, and the user is able to use the automated teller machine (20) accordingly.

13. Method according to Claim 12, wherein before the automated teller machine (20) is coupled to the mobile phone (30), the mobile phone (30) transmits a coupling message to the automated teller machine (20) that is representative of the mobile phone's (30) being intended to be coupled to the automated teller machine (20).

14. Method according to Claim 13, wherein
before the coupling message is transmitted, an information message from the automated teller machine (20) is received that is representative of the automated teller machine's (20) being capable of transmitting the string via the Bluetooth Low Energy connection (40), and the mobile phone (30) responds to receiving the information message by transmitting the coupling message.

15. Method according to one of Claims 12 to 14, wherein the use of the automated teller machine (20) by the user results in the use options that the automated teller machine (20) currently offers to the user, and/or the content that the automated teller machine currently presents on the first display unit (22), changing,
a second string, which is transmitted by the automated teller machine (20) and which is representative of which use options the user currently has on the automated teller machine (20) and/or what the automated teller machine (20) currently presents on the first display unit (22), is received by the mobile phone (30) via the Bluetooth Low Energy connection (40), and
the mobile phone (30) reads aloud the second string to the user by means of the text-to-speech function, the user knowing, based on the reading aloud of the second string, which use options he currently has on the automated teller machine (20) and/or what the automated teller machine (20) currently presents on the first display unit (22), and then being able to use the automated teller machine (20) again.

16. Mobile phone (30) comprising
a second display unit,
a second input unit,
an output unit (32),
a transmission/reception unit,
a second control unit, which is electrically connected to the second display unit, the second input unit, the output unit (32) and the transmission/reception unit and which is designed to carry out the method according to one of Claims 12 to 15.

## Revendications

1. Procédé pour utiliser un guichet automatique de banque (20), avec lequel
le guichet automatique de banque (20) est connecté à un téléphone mobile (30) d'un utilisateur du guichet automatique de banque (20) par le biais d'une liaison Bluetooth à basse consommation (40),
une première chaîne, dont le contenu se rapporte à l'utilisation du guichet automatique de banque (20), est envoyée par le guichet automatique de banque (20) au téléphone mobile (30) de l'utilisateur par le biais de la liaison Bluetooth à basse consommation (40),
le contenu de la première chaîne est lu à l'utilisateur par le téléphone mobile (30) au moyen d'une fonction de conversion de texte en parole du téléphone mobile (30) et l'utilisateur peut utiliser le guichet automatique de banque (20) en conséquence.

2. Procédé selon la revendication 1, avec lequel
avant la connexion du guichet automatique de banque (20) au téléphone mobile (30), un message de connexion est envoyé par le téléphone mobile (30) au guichet automatique de banque (20), lequel est représentatif du fait que le téléphone mobile (30) doit être connecté au guichet automatique de banque (20), et
la connexion au téléphone mobile (30) est initiée par le guichet automatique de banque (20) en réaction à la réception du message de connexion.

3. Procédé selon la revendication 2, avec lequel
un message d'information est émis par le guichet automatique de banque (20) avant l'envoi du message de connexion, lequel est représentatif du fait que le guichet automatique de banque (20) est en mesure d'envoyer la chaîne par le biais de la liaison Bluetooth à basse consommation (40), et
le message de connexion est envoyé par le téléphone mobile (30) en réaction à la réception du message d'information.

4. Procédé selon l'une des revendications précédentes, avec lequel
les possibilités d'utilisation que possède actuellement l'utilisateur au niveau du guichet automatique de banque (20) et/ou les informations que le guichet automatique de banque (20) représente actuellement sur la première unité d'affichage (22) changent en conséquence de l'utilisation du guichet automatique de banque (20) par l'utilisateur
une deuxième chaîne, qui est représentative des possibilités d'utilisation que possède actuellement l'utilisateur au niveau du guichet automatique de banque (20) et/ou des informations que le guichet automatique de banque (20) représente actuellement sur la première unité d'affichage (22), est envoyée par le guichet automatique de banque (20) au téléphone mobile (30) de l'utilisateur par le biais de la liaison Bluetooth à basse consommation (40),
la deuxième chaîne est lue à l'utilisateur par le téléphone mobile (30) au moyen de la fonction de conversion de texte en parole, l'utilisateur sachant, du fait de la lecture de la deuxième chaîne, quelles possibilités d'utilisation il possède actuellement au niveau du guichet automatique de banque (20) et/ou ce que le guichet automatique de banque (20) représente actuellement sur la première unité d'affichage (22), et l'utilisateur pouvant alors de nouveau utiliser le guichet automatique de banque (20).

5. Procédé selon l'une des revendications 3 ou 4, avec lequel
à la fin de l'utilisation du guichet automatique de banque (20) par l'utilisateur, la liaison Bluetooth à basse consommation (40) entre le guichet automatique de banque (20) et le téléphone mobile (30) est coupée, et le message d'information est de nouveau émis par le guichet automatique de banque (20).

6. Procédé pour faire fonctionner un guichet automatique de banque (20), avec lequel
le guichet automatique de banque (20) est connecté à un téléphone mobile (30) d'un utilisateur du guichet automatique de banque (20) par le biais d'une liaison Bluetooth à basse consommation (40),
une première chaîne, dont le contenu se rapporte à l'utilisation du guichet automatique de banque (20), est envoyée par le guichet automatique de banque (20) au téléphone mobile (30) de l'utilisateur par le biais de la liaison Bluetooth à basse consommation (40).

7. Procédé selon la revendication 6, avec lequel
avant la connexion du guichet automatique de banque (20) au téléphone mobile (30), le guichet automatique de banque (20) reçoit de la part du téléphone mobile (30) un message de connexion qui est représentatif du fait que le téléphone mobile (30) doit être connecté au guichet automatique de banque (20), et
la connexion au téléphone mobile (30) est initiée par le guichet automatique de banque (20) en réaction à la réception du message de connexion.

8. Procédé selon la revendication 7, avec lequel un message d'information est émis par le guichet automatique de banque (20) avant l'envoi du message de connexion, lequel est représentatif du fait que le guichet automatique de banque (20) est en mesure d'envoyer la première chaîne par le biais de la liaison Bluetooth à basse consommation (40).

9. Procédé selon l'une des revendications 6 à 8, avec lequel
les possibilités d'utilisation qu'offre actuellement le guichet automatique de banque (20) à l'utilisateur et/ou le contenu que le guichet automatique de banque (20) représente actuellement sur la première unité d'affichage (22) changent en conséquence d'une l'utilisation du guichet automatique de banque (20) par l'utilisateur, et une deuxième chaîne, qui est représentative des possibilités d'utilisation que possède actuellement l'utilisateur au niveau du guichet automatique de banque (20) et/ou de ce que le guichet automatique de banque (20) représente actuellement sur la première unité d'affichage (22), est envoyée par le guichet automatique de banque (20) au téléphone mobile (30) de l'utilisateur par le biais de la liaison Bluetooth à basse consommation (40) .

10. Procédé selon l'une des revendications 6 à 9, avec lequel
à la fin de l'utilisation du guichet automatique de banque (20) par l'utilisateur, la liaison Bluetooth à basse consommation (40) entre le guichet automatique de banque (20) et le téléphone mobile (30) est coupée, et le message d'information est de nouveau émis par le guichet automatique de banque (20).

11. Guichet automatique de banque (20) possédant
une première unité d'affichage (22),
une première unité de saisie (24),
une unité de lecture de carte (28),
une unité de distribution d'argent (26),
une première unité de commande (29), qui est reliée électriquement à la première unité d'affichage (22), à la première unité de saisie (24), à la première unité de lecture de carte (28) et à la première unité de distribution d'argent (26), et qui est configurée pour mettre en oeuvre le procédé selon l'une des revendications 6 à 9.

12. Procédé pour faire fonctionner un téléphone mobile (30), avec lequel le téléphone mobile (30) est connecté à un guichet automatique de banque (20) par le biais d'une liaison Bluetooth à basse consommation (40),
une première chaîne, qui est envoyée par le guichet automatique de banque (20) et dont le contenu se rapporte à l'utilisation du guichet automatique de banque (20), est reçue par le téléphone mobile (30) par le biais de la liaison Bluetooth à basse consommation (40),
la première chaîne est lue à l'utilisateur par le téléphone mobile (30) au moyen d'une fonction de conversion de texte en parole et l'utilisateur peut utiliser le guichet automatique de banque (20) en conséquence.

13. Procédé selon la revendication 12, avec lequel avant la connexion du guichet automatique de banque (20) au téléphone mobile (30), un message de connexion est envoyé par le téléphone mobile (30) au guichet automatique de banque (20), lequel est représentatif du fait que le téléphone mobile (30) doit être connecté au guichet automatique de banque (20).

14. Procédé selon la revendication 13, avec lequel
un message d'information du guichet automatique de banque (20) est reçu avant l'envoi du message de connexion, lequel est représentatif du fait que le guichet automatique de banque (20) est en mesure d'envoyer la chaîne par le biais de la liaison Bluetooth à basse consommation (40), et
le message de connexion est envoyé par le téléphone mobile (30) en réaction à la réception du message d'information.

15. Procédé selon l'une des revendications 12 à 14, avec lequel
les possibilités d'utilisation qu'offre actuellement le guichet automatique de banque (20) à l'utilisateur et/ou le contenu que le guichet automatique de banque (20) représente actuellement sur la première unité d'affichage (22) changent en conséquence de l'utilisation du guichet automatique de banque (20) par l'utilisateur,
une deuxième chaîne, qui est envoyée par le guichet automatique de banque (20) et qui est représentative des possibilités d'utilisation que possède actuellement l'utilisateur au niveau du guichet automatique de banque (20) et/ou de ce que le guichet automatique de banque (20) représente actuellement sur la première unité d'affichage (22), est reçue par le téléphone mobile (30) par le biais de la liaison Bluetooth à basse consommation (40), et
la deuxième chaîne est lue à l'utilisateur par le téléphone mobile (30) au moyen de la fonction de conversion de texte en parole, l'utilisateur sachant, du fait de la lecture de la deuxième chaîne, quelles possibilités d'utilisation il possède actuellement au niveau du guichet automatique de banque (20) et/ou ce que le guichet automatique de banque (20) représente actuellement sur la première unité d'affichage (22), et pouvant alors de nouveau utiliser le guichet automatique de banque (20).

16. Téléphone mobile (30) possédant
une deuxième unité d'affichage,
une deuxième unité de saisie,
une unité de sortie (32),
une unité d'émission/réception,
une deuxième unité de commande, qui est reliée électriquement à la deuxième unité d'affichage, à la deuxième unité de saisie, à l'unité de sortie (32) et à l'unité d'émission/réception et qui est configurée pour mettre en oeuvre le procédé selon l'une des revendications 12 à 15.
